# EUROPÄISCHE PATENTANMELDUNG

(11) **EP 1 586 977 A1**
(43) Veröffentlichungstag der Anmeldung: **19.10.2005**
(21) Anmeldenummer: 04009065.6
(22) Anmeldetag: 16.04.2004
(51) Int. Cl.: G06F 1/16, G06F 3/033

(54) **Folie zum Schutz eines Displays**

(71) Anmelder: SIEMENS AKTIENGESELLSCHAFT, 80333 München (DE)
(72) Erfinder: Papenberg, Gerhard, 90766 Fürth (DE)

(57) **Zusammenfassung**

Die Erfindung betrifft eine Folie (1) zum Schutz eines in einem flächigen Element (2) angeordneten Displays (3), welches mindestens einen berührungssensitiven Sensor (4) aufweist. Damit der berührungssensitive Sensor des Displays bedienbar bleibt, wird vorgeschlagen, dass die Folie (1) auf eine Frontseite (5) des flächigen Elements (2) aufbringbar ist, wobei die Folie (1) im Displaybereich (8) zumindest teilweise transparent ist, wobei die Folie (1) im Displaybereich (8) derart negativ geprägt ist, dass sie im aufgebrachten Zustand die Bedienung des berührungssensitiven Sensors (4) erlaubt.

## Beschreibung

Die Erfindung betrifft eine Folie zum Schutz eines in einem flächigen Element angeordneten Displays.

Visualisierungsgeräte mit so genannter Touchfunktion, deren berührungssensitiver Sensor (im Folgenden auch Touchsensor genannt) hinter einer Frontplatte oder in einem Gehäuse montiert wird, können bisher frontseitig nicht mit einer ebenen, geschlossenen, im Displaybereich transparenten Dekorfolie gegen das Auftreffen von Schmutz, Feuchtigkeit und aggressiven Chemikalien geschützt werden, da die Touchfunktion durch den zu großen Abstand zwischen der Folie und dem Touchsensor, bedingt durch die Materialdicke der Gehäusefront oder der Frontplatte, nicht mehr nutzbar ist. Bisher wird daher entweder auf einen derartigen Schutz verzichtet oder die Visualisierungseinheit getrennt aufgebaut, d.h. dass der Touchsensor von vorne in die Gehäusefront oder die Frontplatte eingeklebt wird und das Display hinter der Gehäusefront oder der Frontplatte montiert wird. Dies erfordert einen aufwändigen Prozess bei der Montage des Touchsensors, der darüber hinaus im Falle eines Defekts nicht ohne Beschädigung der Dekorfolie ausgetauscht werden kann.

Der Erfindung liegt die Aufgabe zugrunde, eine Möglichkeit zum Schutz eines im einem flächigen Element angeordneten Displays anzugeben, wobei ein berührungssensitiver Sensor des Displays bedienbar bleiben soll.

Diese Aufgabe wird gelöst durch eine Folie zum Schutz eines in einem flächigen Element angeordneten Displays, welches mindestens eine berührungssensitiven Sensor aufweist, wobei die Folie auf eine Frontseite des flächigen Elements aufbringbar ist, wobei die Folie im Displaybereich zumindest teilweise transparent ist, wobei die Folie im Displaybereich derart negativ geprägt ist, dass sie im aufgebrachten Zustand die Berührung des berührungssensitiven Sensors erlaubt.

Die Erfindung ermöglicht einerseits ein Erhalten der Touchfunktionalität und gleichzeitig ein wirkungsvolles, frontseitiges Abdichten des in dem flächigen Element angeordneten Displays.

Eine besonders gute Bedienbarkeit des berührungssensitiven Sensors ergibt sich dann, wenn gemäß einer vorteilhaften Ausgestaltung der Erfindung die Folie um das Dickenmaß des flächigen Elements zum Display hin geformt ist. Dadurch befindet sich die Folie im Displaybereich unmittelbar oberhalb des berührungssensitiven Sensors bzw. liegt die Folie gemäß einer weiteren vorteilhaften Ausgestaltung der Erfindung im aufgebrachten Zustand auf dem berührungssensitiven Sensor auf. Dies ermöglicht eine einwandfreie Nutzung der Touchfunktion bei unwesentlichen Lichtstärkeeinbußen.

Gemäß einer weiteren vorteilhaften Ausgestaltung der Erfindung erfolgt die Prägung über einen Winkel kleiner als 90°, so dass bei senkrechtem Einbau des Displays keine Stufe besteht, auf welcher sich Schmutz oder Reinigungsflüssigkeiten absetzen könnten. Durch entsprechend gewählte Radien und eine entsprechend gewählte Schräge im Prägebereich ist somit zumindest bei nicht waagerechtem Einbau des Displays ein ungehindertes Ablaufen von Reinigungsflüssigkeiten möglich. Zudem werden gegebenenfalls vorhandene Kanten des Displayausschnittes des flächigen Elements durch die Folie verdeckt und somit Schmutzansammlungen auch in diesem Bereich vermieden.

Ist die Folie gemäß einer weiteren vorteilhaften Ausgestaltung der Erfindung durchgehend geschlossen, so sind weitere Abdichtmaßnahmen im Displaybereich überflüssig. Das Display ist somit optimal gegen äußere Einflüsse wie Schmutz, Feuchtigkeit sowie aggressive Reinigungsmittel geschützt.

Gemäß einer vorteilhaften Ausgestaltung der Erfindung wird die Folie in einem Visualisierungssystem mit einem in einem flächigen Element angeordneten Display eingesetzt, wobei das Display mindestens einen berührungssensitiven Sensor aufweist und durch die auf eine Frontseite des flächigen Elements aufgebrachte Folie geschützt ist. Vorteilhafterweise wird die Folie aufgeklebt.

Gemäß einer weiteren vorteilhaften Ausgestaltung der Erfindung ist eine der Dicke der Folie entsprechende Aussparung in der Frontseite zur Aufnahme der Folie vorgesehen. Dies führt zu einer weiter verbesserten Reinigbarkeit des Displaybereichs durch Vermeidung von Stufen und Toträumen.

Das Display mit dem berührungssensitiven Sensor wird vorteilhafterweise rückseitig an dem flächigen Element angebracht.

Nachfolgend wird die Erfindung anhand der in den Figuren dargestellten Ausführungsbeispiele näher beschrieben und erläutert.

Es zeigen:
- FIG 1: eine vorderseitige Ansicht einer Folie zum Schutz eines Displays,
- FIG 2: eine Ansicht von der Seite einer solchen Folie,
- FIG 3: ein Ausführungsbeispiel eines Visualisierungssystems mit einem in einem flächigen Element angeordneten Display, welches durch eine auf eine Frontseite des flächigen Elements aufgebrachte Folie geschützt ist und
- FIG 4: ein weiteres Ausführungsbeispiel eines solchen Visualisierungssystems.

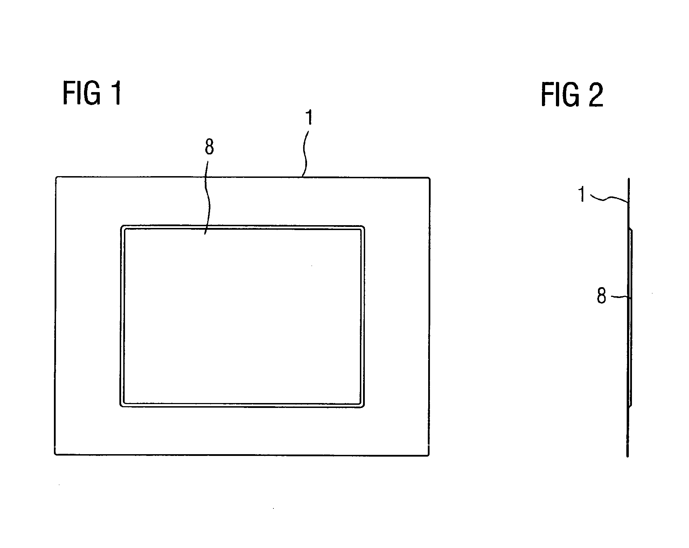

Figur 1 und 2 zeigt eine Folie 1 zum Schutz eines in einem flächigen Element angeordneten Displays. Die Folie 1 ist in einem Displaybereich 8 zumindest teilweise transparent und negativ geprägt.

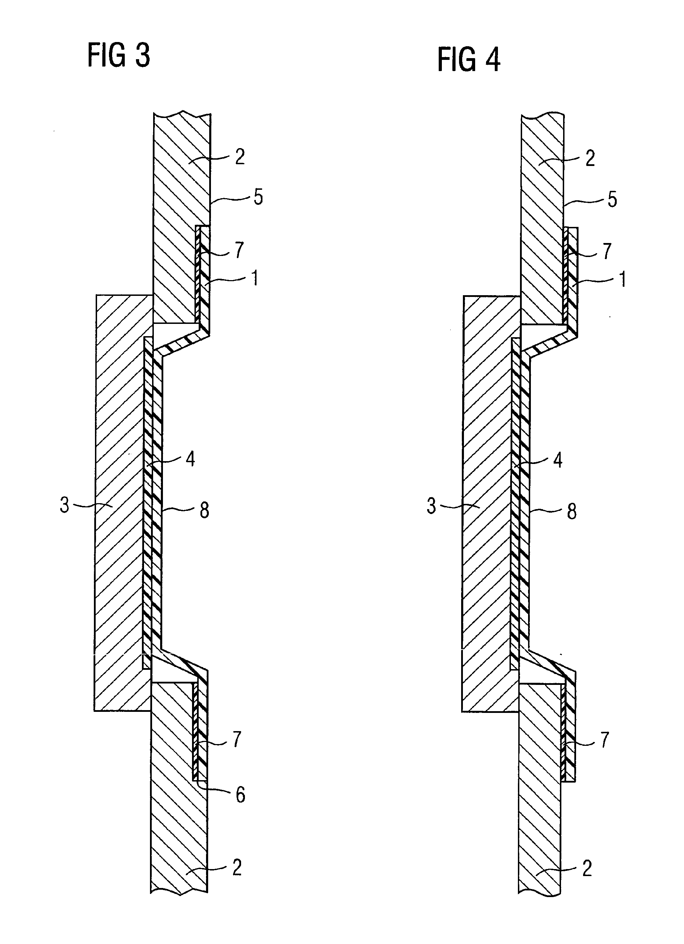

Figur 3 und 4 zeigen ein Visualisierungssystem mit einem in einem flächigen Element 2, z.B. einer Gehäusefront oder einer Frontplatte, angeordneten Display 3, welches einen berührungssensitiven Sensor 4 aufweist und welches durch eine auf die Frontseite 5 des flächigen Elements 2 aufgebrachte Folie 1 aufweist, wobei die Folie 1 im Displaybereich 8 transparent ist. Die Folie 1 ist im Displaybereich 8 derart negativ geprägt, dass sie die Bedienung des berührungssensitiven Sensors 4 erlaubt. Gemäß dem Ausführungsbeispiel nach Figur 3 ist eine der Dicke der Folie 1 entsprechende Aussparung 6 in der Frontseite 5 des flächigen Elements 2 zur Aufnahme der Folie 1 vorgesehen. Das Display 3 mit dem berührungssensitiven Sensor 4 ist rückseitig an dem flächigen Element 2 angebracht. Gemäß den Ausführungsbeispielen nach Figur 3 und 4 liegt die Folie 1 auf dem berührungssensitiven Sensor 4 im Displaybereich 8 auf. Die Prägung der Folie 1 erfolgt über einen Winkel kleiner als 90°, so dass die derart geformte Folie keine schwer zu reinigenden Kanten aufweist. Die Folie ist mit einem Doppelklebeband 7 in die Aussparung 6 der Frontseite 5 (Figur 3) bzw. auf die Frontseite 5 (Figur 4) geklebt.

Zusammengefasst betrifft die Erfindung somit eine Folie 1 zum Schutz eines in einem flächigen Element 2 angeordneten Displays 3, welches mindestens einen berührungssensitiven Sensor 4 aufweist. Damit der berührungssensitive Sensor des Displays bedienbar bleibt, wird vorgeschlagen, dass die Folie 1 auf eine Frontseite 5 des flächigen Elements 2 aufbringbar ist, wobei die Folie 1 im Displaybereich 8 zumindest teilweise transparent ist, wobei die Folie 1 im Displaybereich 8 derart negativ geprägt ist, dass sie im aufgebrachten Zustand die Bedienung des berührungssensitiven Sensors 4 erlaubt.

## Patentansprüche

1. Folie (1) zum Schutz eines in einem flächigen Element (2) angeordneten Displays (3), welches mindestens einen berührungssensitiven Sensor (4) aufweist, wobei die Folie (1) auf eine Frontseite (5) des flächigen Elements (2) aufbringbar ist, wobei die Folie (1) im Displaybereich (8) zumindest teilweise transparent ist, wobei die Folie (1) im Displaybereich (8) derart negativ geprägt ist, dass sie im aufgebrachten Zustand die Bedienung des berührungssensitiven Sensors (4) erlaubt.

2. Folie nach Anspruch 1,
**dadurch gekennzeichnet,**
**dass** sie um das Dickenmaß des flächigen Elements (2) zum Display (3) hin geformt ist.

3. Folie nach Anspruch 1 oder 2,
**dadurch gekennzeichnet,**
**dass** die Folie (1) im aufgebrachten Zustand auf dem berührungssensitiven Sensor (4) aufliegt.

4. Folie nach einem der vorhergehenden Ansprüche,
**dadurch gekennzeichnet,**
**dass** die Prägung über einen Winkel kleiner 90° erfolgt.

5. Folie nach einem der vorhergehenden Ansprüche,
**dadurch gekennzeichnet,**
**dass** sie klebbar ist.

6. Folie nach einem der vorhergehenden Ansprüche,
**dadurch gekennzeichnet,**
**dass** sie durchgehend geschlossen ist.

7. Visualisierungssystem mit einem in einem flächigen Element (2) angeordneten Display (3), welches mindestens einen berührungssensitiven Sensor (4) aufweist und welches durch eine auf eine Frontseite (5) des flächigen Elements (2) aufgebrachte Folie (1) nach einem der vorhergehenden Ansprüche geschützt ist.

8. Visualisierungssystem nach Anspruch 7,
**dadurch gekennzeichnet,**
**dass** eine der Dicke der Folie (1) entsprechenden Aussparung (6) in der Frontseite (5) zur Aufnahme der Folie (1) vorgesehen ist.

9. Visualisierungssystem nach Anspruch 7 oder 8,
**dadurch gekennzeichnet,**
**dass** das Display (3) mit dem berührungssensitiven Sensor (4) rückseitig an dem flächigen Element (2) angebracht ist.
